# EUROPÄISCHE PATENTANMELDUNG

(11) **EP 0 933 309 A2**
(43) Veröffentlichungstag der Anmeldung: **04.08.1999**
(21) Anmeldenummer: 99100380.7
(22) Anmeldetag: 18.01.1999
(51) Int. Cl.: B65D 81/02

(54) **Mehrwegfähiger Transport- und/oder Lagerbehälter**

(30) Priorität: 30.01.1998 DE 29801569 U
(71) Anmelder: SIEMENS AKTIENGESELLSCHAFT, 80333 München (DE)
(72) Erfinder: Grund, Werner, Dipl.-Ing. (FH), 91058 Erlangen (DE)

(57) **Zusammenfassung**

Ein mehrwegfähiger Transportbehälter weist zwischen seinem Korpus (B) und seinem Deckel (BD) einen aufblasbaren Balg (FB) auf, durch den empfindliche Ware (W) während des Transports fixierbar ist.

## Beschreibung

Die Erfindung bezieht sich auf einen mehrwegfähigen Transport- und/oder Lagerbehälter mit einem die jeweilige Ware aufnehmenden Korpus und einem den Korpus abschließenden arretierbaren Deckel.

Zum Transport von Waren werden häufig Mehrwegbehälter eingesetzt. Um eine Verschmutzung der Waren beim Transport und der Lagerung zu vermeiden, werden die Behälter mit einem Deckel verschlossen. Damit gerade teuere und empfindliche Artikel, z.B. Pharmazeutika, Parfümerieartikel, Bücher usw., nicht verrutschen und beschädigt werden, wird die Ware vor allem im außerbetrieblichen Transport im Behälter mit Füllmaterial gepolstert. Als Füllmaterial kommen verschiedene Arten von Chips, Textilien oder gefaltete Kartonagen oder Papiermaterialien zum Einsatz. Problematisch ist dabei die aufwendige und teuere Entsorgung des Füllmaterials. Ferner kann das Füllmaterial die Waren und die Behälter so verschmutzen, daß Reinigung und Nachbearbeitung erforderlich ist. Der dazu erforderliche Einsatz erfolgt durch Personal und läßt sich kaum automatisieren.

Aufgabe der Erfindung ist es, eine einfache und umweltfreundliche Einrichtung zum Fixieren der empfindlichen Waren während des Transports zu schaffen.

Gemäß der Erfindung wird dies für Transport- und/oder Lagerbehälter der eingangs genannten Art dadurch erreicht, daß zwischen Korpus und Deckel mindestens ein aufblasbarer Balg vorgesehen ist, durch den die Ware in ihrer Position festlegbar ist.

Nach dem Verschließen des Behälters wird der jeweilige Balg aufgeblasen und füllt den verbliebenen Leerraum im Inneren des Behälters auf. Der Balg schmiegt sich an die Kontur der Waren und verhindert ein Verrutschen bzw. die Beschädigung der Artikel beim Transport. Die Anpreßkraft kann über den Druck individuell, z.B. in Abhängigkeit des Artikelsortiments, eingestellt werden.

In diesem Zusammenhang erweist es sich gemäß einer ersten vorteilhaften Ausbildung der Erfindung als besonders vorteilhaft, daß der Balg durch ein von außen zugängliches Ventil befüllbar und entleerbar ist. Beim Leeren des Behälters wird das Ventil geöffnet und der Druck durch die Eigensteifigkeit des Balges abgebaut, der Niederhalter des Behälterdeckels gelöst und der Deckel abgenommen.

In diesem Zusammenhang erweist es sich als äußerst vorteilhaft, daß als Balg ein Faltenbalg vorgesehen ist, da dieser ein definiertes Aufblähverhalten und Zusammenlegverhalten aufweist.

Dadurch, daß der Balg am Deckel kraft- und/oder formschlüssig anbringbar ist, ist die Anzahl der Einzelteile gering gehalten und beim Stapeln der Deckel werden gleich die Bälge mitgestapelt und es entweicht der Restdruck. Der jeweilige Balg verschwindet in der Deckelkontur.

Ein Ausführungsbeispiel der Erfindung ist in der Zeichnung dargestellt und wird im folgenden näher erläutert. Dabei zeigen:
- FIG 1: einen mehrwegfähigen Transportbehälter mit geleertem Faltenbalg und
- FIG 2: einen gleichen Transportbehälter mit gefülltem Faltenbalg.

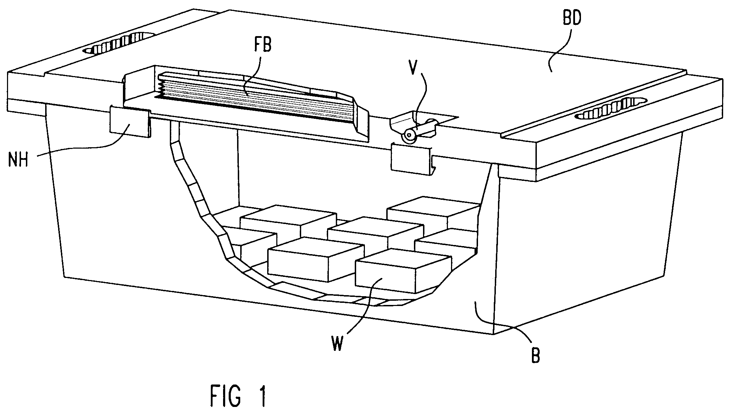

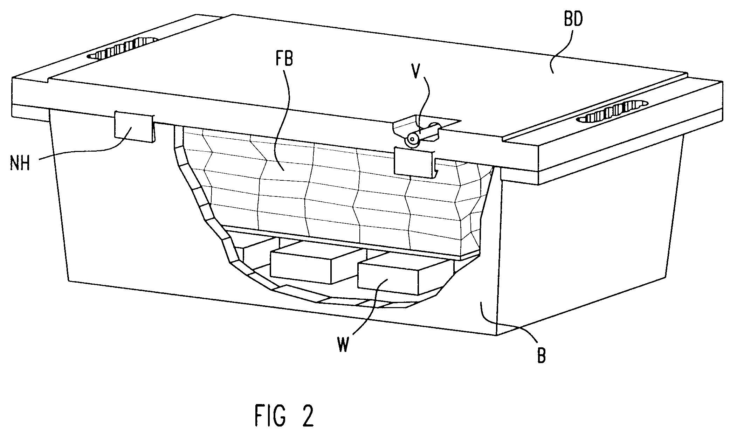

In der Darstellung gemäß FIG 1 ist ein mehrwegfähiger Transport- und Lagerbehälter gezeigt, der aus einem Behälterkorpus B besteht, der durch einen Behälterdeckel BD verschließbar ist. Im Behälterkorpus B befinden sich Transportgüter, von denen die Ware W im einzelnen bezeichnet ist. Der Behälterdeckel BD und der Behälterkorpus B werden über verschließende Niederhalter formschlüssig miteinander fixiert, wobei nur einer der Niederhalter NH bezeichnet ist. Form- und/oder kraftschlüssig am Behälterdeckel B ist ferner ein Faltenbalg FB angebracht, der über ein Ventil V entleert bzw. gefüllt werden kann. Während bei der Darstellung gemäß FIG 1 der Faltenbalg FB geleert ist, wird in der Darstellung gemaß FIG 2, die im übrigen der Darstellung gemäß FIG 1 entspricht, gezeigt, wie der Faltenbalg FB sich aufbläht, wenn über das Ventil V eine Füllung mit Luft erfolgt ist. Der aufgeblähte Faltenbalg FB sorgt nun dafür, daß das Transportgut, so die Ware W, in ihrer Position gesichert ist.

Das Ventil V kann durchaus mit einer Einrichtung zur Druckmessung ergänzt werden, die nach dem Füllen die Druckdichtigkeit des Balges prüft. Alle Komponenten des Systems sind modular aufgebaut, um ein Auswechseln defekter Einzelkomponenten zu ermöglichen.

Das Verschließen des Behälterkorpus B mit dem Behälterdeckel BD und das Aufblasen des Faltenbalgs FB lassen sich automatisieren, so daß dann ein manuelles Handhaben entfallen kann.

## Patentansprüche

1. Mehrwegfähiger Transport- und/oder Lagerbehälter mit einem die jeweilige Ware aufnehmenden Korpus und einem den Korpus abschließenden arretierbaren Deckel, **dadurch gekennzeichnet,** daß zwischen Korpus (B) und Deckel (BD) mindestens ein aufblasbarer Balg (FB) vorgesehen ist, durch den die Ware (W) in ihrer Position festlegbar ist.

2. Mehrwegfähiger Transport- und/oder Lagerbehälter nach Anspruch 1, **dadurch gekennzeichnet,** daß der Balg (FB) durch ein von außen zugängliches Ventil (V) befüllbar und leerbar ist.

3. Mehrwegfähiger Transport- und/oder Lagerbehälter nach einem der vorstehenden Ansprüche, **dadurch gekennzeichnet,** daß als Balg ein Faltenbalg (FB) vorgesehen ist.

4. Mehrwegfähiger Transport- und/oder Lagerbehälter nach einem der vorstehenden Ansprüche, **dadurch gekennzeichnet,** daß der Balg (FB) am Deckel (BD) kraft- und/oder formschlüssig anbringbar ist.
